# EUROPEAN PATENT APPLICATION

(11) **EP 1 699 170 A2**
(43) Date of publication of application: **06.09.2006**
(21) Application number: 06004347.8
(22) Date of filing: 03.03.2006
(51) Int. Cl.: H04L 12/24, H04L 29/06, H04N 7/14

(54) **Traffic dimensioning in metro area with IPTV architecture**

(30) Priority: 03.03.2005 US 658239 P; 02.03.2006 US 366674
(71) Applicant: Alcatel, 75008 Paris (FR)
(72) Inventor: Sofman, Ley B., TX 75023 Plano (US); Ester, Gary Wayne, TX 75023 Plano (US)
(74) Representative: Schäfer, Wolfgang

(57) **Abstract**

A system, method, and computer readable medium for traffic dimensioning in a metro area with Internet Protocol Television (IPTV) architecture that comprises calculating video on demand traffic, calculating instant channel change traffic, calculating broadband television traffic, calculating picture-in-picture traffic, calculating voice over internet protocol (VoIP) traffic, calculating high speed Internet traffic, and calculating total traffic as a summation of the calculated video on demand traffic, the calculated instant channel change traffic, the calculated broadband television traffic, the calculated picture-in-picture traffic, the calculated VoIP traffic and the calculated high speed Internet traffic.

## Description

### CROSS-REFERENCE TO RELATED APPLICATIONS

The present invention is related to and claims priority of U.S. provisional patent application serial number 60/658,239, filed on March 3, 2005, titled "Method and System for Traffic Dimensioning in Metro Area with IPTV Architecture," the entire contents of which are enclosed by reference herein.

### BACKGROUND OF THE INVENTION

The present invention is generally related to traffic dimensioning, and more specifically to traffic dimensioning in a metro area with (Internet Protocol Television) IPTV architecture. IPTV denotes a system or architecture whereby a digital television service is delivered to a subscriber over a broadband connection. The present invention provides a traffic dimensioning tool that calculates the traffic volumes for each type of traffic in a metro network, at a number of different locations in the network such as: between an Ethernet Switch in an End Office and a DSLAM, between an IP Router at a Hub Office and an Ethernet Switch in an End Office, and between an IP Router at a Video Serving Office and an IP Router at a Hub Office. Such dimensioning of traffic (such as video, voice, IP, and the like) occurs in a single metro area based on IPTV architecture. The present invention further includes determining aggregate traffic volumes between active network elements for delivery of subscriber services. Previous attempts to provide traffic dimensioning relied on rough estimates that were manually calculated leading to inefficient and inaccurate results.

Therefore, what is needed is a traffic dimensioning tool that overcomes problems and limitations associated with previous attempts to provide traffic dimensioning. The present invention provides a far more accurate and efficient manner in which to dimension traffic and, as a result, provides a savings in capital expenditures by minimizing a number of switches which previously would have been required and a savings in time as the traffic dimensioning is performed in an automated manner. Further, the present invention results in an avoidance of traffic blockage.

### SUMMARY OF THE INVENTION

The present invention, describes an IPTV traffic modeling tool designed to model a single metro area based on the IPTV architecture, and to determine aggregate traffic volumes between active network elements for delivery of subscriber services. The tool calculates the traffic volumes for each type of traffic in an IPTV metro network at a number of different locations in the network such as: between an Ethernet Switch in an End Office and a DSLAM, between an IP Router at a Hub Office and an Ethernet Switch in an End Office, and between an IP Router at a Video Serving Office and an IP Router at a Hub Office.

In one embodiment of the present invention, a computer readable medium comprises instructions for calculating video on demand traffic, calculating instant channel change traffic, calculating live or broadband television traffic, calculating picture in picture traffic, calculating voice over internet protocol traffic, calculating high speed internet traffic, and calculating total traffic as the summation of the calculated video on demand traffic, the calculated instant channel change traffic, the calculated broadband television traffic, the calculated picture in picture traffic, the calculated voice over internet protocol traffic and the calculated high speed internet traffic. The computer readable medium may also comprise the calculation of video on demand traffic comprises a number of set top boxes multiplied by a percentage of set top boxes that concurrently view video on demand at peak time multiplied by a product of a percentage of video on demand active set top boxes that view high definition video on demand and an average bandwidth to transmit high definition video on demand to the subscriber added to the product of one minus the percentage of video on demand active set top boxes that view high definition video on demand and the average bandwidth to transmit standard definition video on demand to the subscriber. The computer readable medium may comprise the calculation of broadband television traffic comprises the product of a total number of multicast high definition video channels and the average bandwidth to transmit a high definition multicast program added to the product of a total number of multicast standard definition channels and the average bandwidth to transmit a standard definition multicast program. The computer readable medium may comprise the calculation of instant channel change traffic comprises a number of set top boxes multiplied by a percentage of set top boxes that concurrently view multicast program at peak time multiplied by a percentage of broadband television active set top boxes that concurrently change channel multiplied by a program change burst ratio multiplied by a percentage of broadcast channel active set top boxes that view high definition broadcast channel multiplied by the average bandwidth to transmit high definition multicast program added to one minus the percentage of broadcast channel active set top boxes that view high definition broadcast channel multiplied by the average bandwidth to transmit a standard definition multicast program. The computer readable medium may comprise the calculation of picture in picture traffic comprises the addition of video on demand picture in picture traffic and linear programming picture in picture traffic wherein the video on demand picture in picture traffic comprises a number of set top boxes multiplied by a percentage of set top boxes that concurrently view video on demand at peak time multiplied by a percentage of video on demand active set top boxes that view picture in picture multiplied by the average picture in picture bandwidth per stream and wherein the linear programming picture in picture traffic comprises the product of the sum of a total number of multicast high definition video channels and a total number of multicast standard definition channels multiplied by an average picture in picture bandwidth per stream. The computer readable medium may comprise the calculation of voice over internet protocol traffic comprises a number of voice over internet subscribers multiplied by an average voice over internet protocol bandwidth per subscriber. The computer readable medium may also comprise the calculation of high speed internet traffic comprises a product of the number of high speed internet subscriber and an average high speed internet bandwidth per subscriber.

In a further embodiment of the present invention, a method comprises allocating a vertical coordinate and a horizontal coordinate to each of a plurality of physical offices, assigning to each of at least one pair of redundant intermediate offices the physical office, associating a central office to the at least one pair of redundant intermediate offices, and mapping each of the at least one pair of assigned redundant intermediate offices to the physical office. The method may also include analyzing the mapped redundant intermediate offices to insure that the redundant intermediate offices which are associated with the central office are not located at the same physical office, creating a map based upon the assigned physical office of the at least one pair of redundant intermediate offices, color coding the created map to show the association between the at least one pair of redundant intermediate offices and the central office, extracting data from an assumptions worksheet, which includes multicast channel information, channel change behavior at peak time information and video on demand information, extracting data from a main input worksheet, which includes central office vertical coordinates, central office horizontal coordinates, a number of distribution areas and a number of households and extracting data from a central office statistics worksheet, which includes a data server location, a video on demand server location, a node name for each of the at least one redundant intermediate offices, a number of distribution areas per central office, a number of households per central office and expected household connection percentages for switch digital video, high speed internet and voice over internet protocol.

In yet a further embodiment, a system for traffic dimensioning in a metro area with Internet Protocol Television (IPTV) architecture comprises a processor for summing a total traffic comprised of a calculated video on demand traffic, a calculated instant channel change traffic, a calculated broadband television traffic, a calculated picture in picture traffic, a calculated voice over internet protocol traffic and a calculated high speed internet traffic for a central office in communication with at least one pair of redundant intermediate offices, and a memory for storing each summation and calculation. The processor may analyze the set of redundant intermediate offices to insure that each of the set of redundant intermediate office associated with the central office are located at different physical offices. The processor may extract assumptions data, which includes at least one of: multicast channel information, channel change behavior at peak time information and video on demand information. The processor may extract input data, which includes at least one of: central office vertical coordinates, central office horizontal coordinates, a number of distribution areas and a number of households, and the processor may extract central office data, which includes at least one of: a data server location, a video on demand server location, a node name for each of the at least one redundant intermediate offices, a number of distribution areas per central office, a number of households per central office and expected household connection percentages for switch digital video, high speed internet and voice over internet protocol.

### BRIEF DESCRIPTION OF THE DRAWINGS

Figure 1 depicts a system in accordance with a preferred embodiment of the present invention;
Figure 2 depicts a Main Input Worksheet in accordance with a preferred embodiment of the present invention;
Figure 3 depicts an Assumptions Input Worksheet in accordance with a preferred embodiment of the present invention;
Figure 4 depicts a CO Statistics Worksheet in accordance with a preferred embodiment of the present invention;
Figure 5 depicts a IOs Input Worksheet in accordance with a preferred embodiment of the present invention;
Figure 6 depicts an example Network Map in accordance with a preferred embodiment of the present invention;
Figure 7 depicts a Summary Worksheet Table in accordance with a preferred embodiment of the present invention;
Figure 8 depicts a Summary Worksheet Chart in accordance with a preferred embodiment of the present invention;
Figure 9 depicts a DA Statistics Output Worksheet in accordance with a preferred embodiment of the present invention;
Figure 10 depicts a DA Traffic Output worksheet in accordance with a preferred embodiment of the present invention;
Figure 11 depicts a CO/IO Statistics Output Worksheet in accordance with a preferred embodiment of the present invention; and
Figure 12 depicts a CO/IO Traffic Output Worksheet in accordance with a preferred embodiment of the present invention.

### DETAILED DESCRIPTION OF THE INVENTION

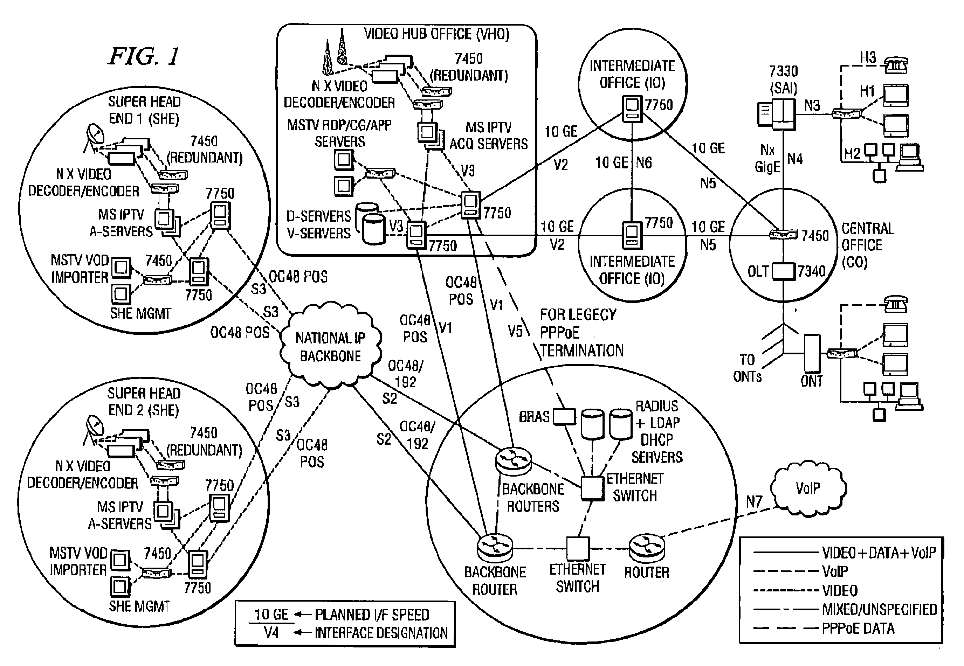

Referring now to FIG. 1, a network of the present invention is depicted and contains a number of modules or nodes such as a Super Head End (SHE), a Video Hub Office (VHO), an Intermediate Office (IO), a Central Office (CO), a Serving Area Interface (SAI), an Optical Network Terminal (ONT), and various end-user equipment such as set-top boxes, computers, televisions, and other electronic equipment. These modules or nodes may be connected by a variety of sources such as fiber, IP (IP backbone, VoIP network, etc.), wireless, twisted pairs, or other connection means.

The Super Head End (SHE) is comprised of a set of N video decoders and encoders connected to redundant Ethernet switches such as the Alcatel 7450 which in turn is connected to a set of Internet Protocol Television (IPTV) acquisition servers which in turn is connected to a service router such as the Alcatel 7750. A Television video on Demand (TV VOD) importer is connected to an Ethernet switch such as the Alcatel 7450 which in turn is connected to a set service routers such as the Alcatel 7750. A number of other Alcatel switches, routers, and telecommunications equipment can be used without departing from the scope of the present invention.

The Video Hub Office (VHO) is comprised of a set of N video decoders and encoders connected to redundant Ethernet switches such as the Alcatel 7450 which in turn are connected to a set of Internet Protocol Television (IPTV) acquisition servers which are connected to a service router such as the Alcatel 7750. A set of Television, Reliable Datagram Protocol (TV RDP) and Control Gate (CG) servers are connected to a set of service routers such as the Alcatel 7750. Data Servers (DS) and video Servers (VS) are connected to a service router such as the Alcatel 7750.

The Super Head End (SHE) service routers and video Hub Office (VHO) service routers are connected by video feeds to a national internet protocol backbone router. The SHE and VHO are also connected and to Intermediate Offices (IO) service routers such as the Alcatel 7750 which carry video, data and VoIP. The IOs are connected to a Central Office (CO) Ethernet switch such as the Alcatel 7450. The CO is comprised of an Ethernet switch such as the Alcatel 7450 and a fiber to the user system such as the Alcatel 7340.

The CO is connected to an optical network terminal carrying video, data and voIP. The CO is also connected to serving area interface carrying video, data and VoIP.

The IPTV Traffic Modeling Tool of the present invention allows topology flexibility, in that the number of Intermediate Offices (IO) can be varied, including a scenario for small metros that will not require an IO. Further, the communications coupling between any of the nodes or modules depicted in FIG. 1 can occurs via a wireless protocol, a wired protocol and/or a combination of the wireless protocol and the wired protocol.

The calculated traffic volumes are presented according to the following subgroups: Video On Demand (VoD) traffic, Linear Programming (LP) traffic, Instant Channel Change (ICC) traffic, Picture In Picture (PIP) traffic, Voice Over IP (VoIP) traffic, High Speed Internet (HSI) traffic, Broadband Television (BTV) and the total of each of the traffic types.

The present invention is designed to accept inputs in various different forms such as data on the number of households per Distribution Area (DA) and the number of households per Central Office (CO).

This data can be input for a single year, or up to ten years or more. In order to calculate the network data properly, the number of IOs is identified and the COs that are subtended from each pair of IOs is defined. When the number of households per CO option is selected, the traffic per DA will be calculated based on an average number of households per DA. The number of DAs per CO is an input to the tool.

Another major input to the modeling tool are fundamental traffic assumptions which include, for example, video take rates, ratio of high definition to standard definition, concurrency of fast channel change and VOD, etc. These are the main drivers in dimensioning the output.

Two output sheets are generated for each of the three points in the network- The first sheet gives statistics on the subscribers served from each point in the network. The second sheet gives the resultant traffic volume for the seven traffic categories listed above. Fewer or greater output sheets can be used without departing from the scope of the present invention.

An additional feature of the modeling tool, is the creation of a color coded map where the association between each 10 pair and their subtended COs can be made. The map can be created for up to twenty IO pairs or more. If the IOs are associated with a physical office, then the IO offices will be differentiated by being represented by a square on the map whereas the CO will be represented by circles. Two IOs can be located in the same physical office, but not both redundant pairs, and only one IO from each of two different pairs can be located in the same CO.

The tool of the present invention utilizes a number of worksheets. A main inputs sheet is where network data is entered. An assumptions sheet is where network and subscriber behavior is entered. A CO statistics sheet is where CO service penetration percentages are entered as well as association of COs to IO pairs. An IO worksheet is where assignment of IOs to CO locations are made. A traffic summary sheet shows totals of the traffic. An average traffic summary shows average values for the traffic. A DA sub sheet shows statistics about the subscribers on a DA basis. A DA Traffic sheet shows traffic volumes by traffic type on a DA basis. A CO Sub sheet shows statistics about the subscribers on a CO basis. A CO Traffic sheet shows traffic volumes by traffic type on a CO basis. An IO Sub sheet shows statistics about the subscribers on a IO basis. An IO Traffic sheet shows traffic volumes by traffic type on a IO basis and a logical architecture sheet shows the architecture that is used for the logical algorithms in this tool.

### Operation Of The IPTV Modeling Tool

The data describing the network topology is input, either on a per DA basis or CO basis, using the Main Input sheet or the CO Input sheet. The number of IO pairs in the network design is entered into the top row of the Assumptions worksheet. The data is loaded into the modeling tool by pressing the Load Model button on the Assumptions sheet. Other methods of entering data can be utilized without departing from the scope of the present invention. This action generates the appropriate output sheets, as well as the remaining input sheets. The assumptions sheet is filled describing network and user behavior information. The IOs are associated with a physical office on the IOs worksheet which can be done directly on the IOs sheet or through the interactive mapping function. Each CO is associated with one pair of IOs, listed on the CO Statistics worksheet. The Build Model button on the Assumptions sheet runs the modeling tool. After the Build Model button is pressed, the output sheets are filled in with the appropriate calculated data.

If the CO to IO assignment was done manually on the CO Statistics and IOs worksheets, then after the model is built, the map can be created by pressing the Create Map button on the Assumptions sheet. The mapping function can be used to perform the assignment of IOs, and association of COs to IO pairs- In this case, the map will be complete prior to the Build Model function being run.

For example, the tool of the present invention may be accessed by and utilized by a cellular phone or a computer with external wireless capability (such as a wireless card) or internal wireless capability (such as 802.11 or any of the other 802 variants), or by an Internet Protocol enabled phone. Other devices may also be used to communicate with the tool. The tool of the present invention may be software, hardware, firmware, and/or the combination of software, hardware, and/or firmware.

### Inputting Network Data

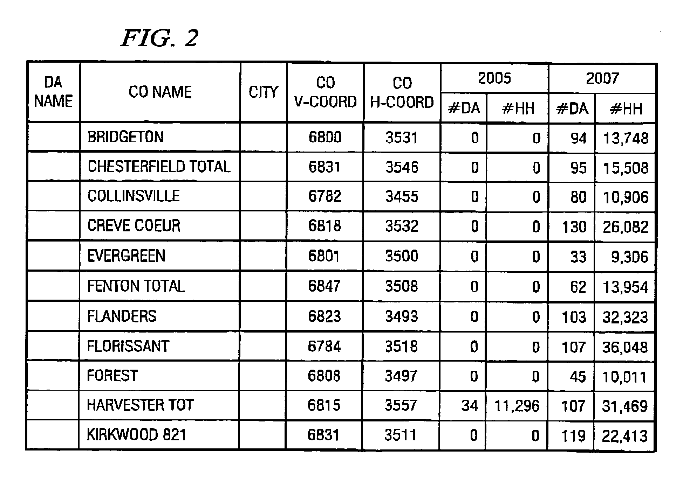

Referring now to FIG. 2 showing one embodiment of the invention, the network data is input into the Main Input sheet, which is the first sheet in the workbook. The first column is the name of the Distribution Area. This can be any combination of letters or numbers, such as a Common Language Location Identification (CLLI) code. If the input data is DA based, each DA in a central office has a unique name and is not to be left blank. If the input data is CO based, this column is left blank.

The second column is the name of the CO that the DA is connected to. This name can be any combination of letters or numbers, such as the CLLI code, or office name. If the data being input is by CO, then the CO name will appear once, but if it is by DA, the name is duplicated identically for every DA that is connected to that CO. Each CO in a metro network has a unique name.

The third column is the City name, which will be used to generate the CO Statistics worksheet. This is the name of the city that the CO or DA resides in. The value in the city name field of the first instance (row) for each CO will be used to generate the city name in the CO Statistics worksheet.

The fourth and fifth columns are the Vertical and Horizontal (V&H) coordinates of the CO. If the data is being input on a DA basis, then the V&H coordinates will be for the CO that the DA is connected to, and will be duplicated for each DA connected to that CO. Only the values of the V&H coordinates of first instance (row) of each CO will be used to generate the V&H coordinates fields in the CO Statistics worksheet and later used to generate the MAP If the data is being input on a CO basis, then these v&H coordinates will be different for each CO. The v&H coordinate number is between 1 and 10,000 and is positive.

The columns to the right of the V&H coordinates will be paired, two columns for each year of data to be entered. The first of the two columns is the number of DA per CO. If the data is being entered on a per DA basis, then this column will contain the value 1 for each DA in the list. If the data is being input on a CO basis, this column contains the number of DAs connected to that CO for the year of interest. The second column of the pair contains the number of households, either per DA for data being entered on a DA basis, or per CO for data being entered on a CO basis. The order of the columns may be altered without departing from the scope of the present invention.

Before entering the data into the Main Input sheet the old data should be removed and the sheet unlocked. This can be done by pressing Reset Main Input button on Assumption sheet. As a result, the old data from Main Input sheet will be deleted, and the header row with columns for 3 years of data will be generated. To have the tool calculate the traffic for a number of years other than 3, the number of columns that represent scenarios (or years) may be changed. To add extra columns, highlight the two columns by using the arrow to highlight the column headers. This will copy the column formatting for pasting into additional columns.

Then select the number of columns necessary for the number of additional years desired. For example if the Main Input worksheet is formatted for only one year, and a study of five years is desired, then highlight the two columns for the first year, then select the cells in row #1 for six additional columns, and paste the column formatting into these columns. The year label is changed manually to reflect the year of the data to be input into those columns. Data for each year can be cut and pasted into these columns from any other workbook or database.

After the data is entered into the Main Input worksheet, the number of IO pairs required for the metro area is entered on the top line of the Assumptions worksheet. Then click on the Load Model button located at the top of the Assumptions worksheet to begin the formatting of the workbook. At this time the output worksheets will be created with the proper number of years to match the input and the proper number of office labels corresponding to the data on the input sheet. The three remaining input sheets, the Assumptions sheet, the CO Statistics sheet, and the IO sheet will be modified to reflect the input data.

For example, this worksheet may be accessed by the cellular phone or the computer with external wireless capability (such as the wireless card) or internal wireless capability (such as 802.11 or any of the other 802 variants), or by the Internet Protocol enabled phone. Other devices may also communicate with the worksheet.

### Filling Out The Assumptions Worksheet

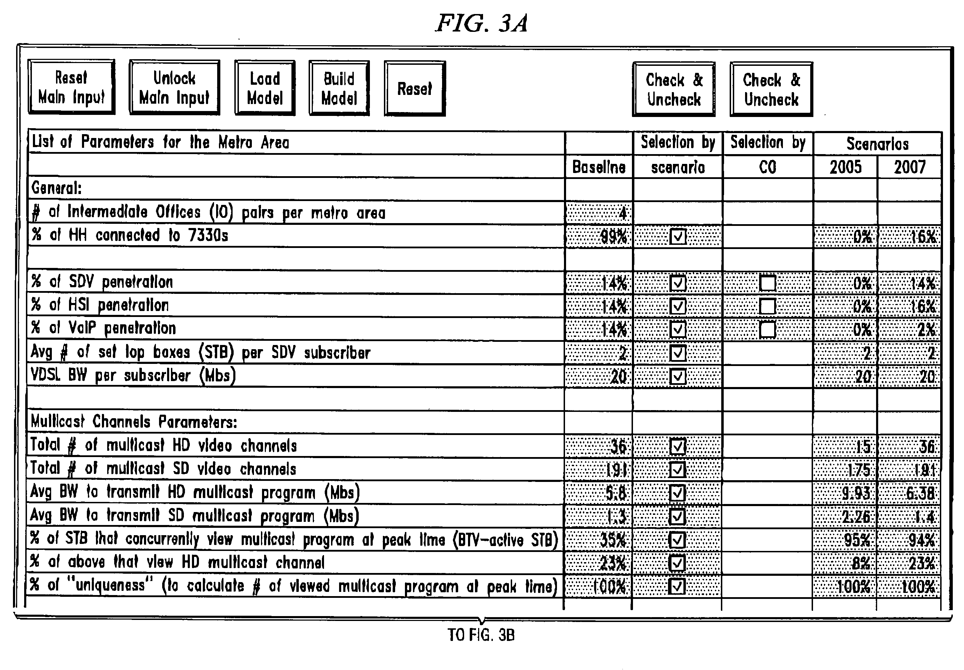

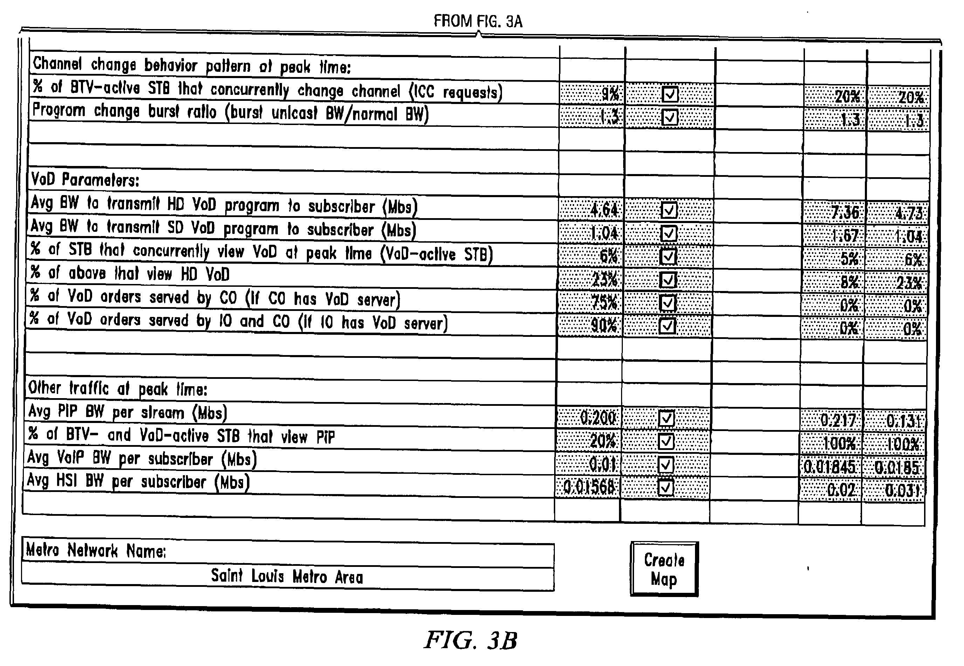

Referring now to FIG. 3, one embodiment of the invention depicts the Assumptions worksheet configured to the behavioral characteristics of the network. This sheet has a list of characteristics, to which values are assigned as shown in FIG. 3. There are a column of values labeled Baseline that can be used providing the assumptions do not change over the various years of the study, or if there is only one year of interest. There are two columns of check boxes, the first labeled Selection By Scenario and the second Selection By CO. If the check box for any characteristic is checked in the Selection By Scenario column, then the assumptions in the columns to the right are used for each year. If the check box is not checked, then the value in the baseline column will be used for the years of the study. The check boxes in each column are independent, some can be checked and some not checked. There is a button at the top of the column that will alternatively check and uncheck each of the boxes in this column. The check boxes in the Selection By CO column operate in a similar manner. If the check box is checked the values for the penetration of Switched Digital Video (SDV), HSI, and VoIP can be set differently for each CO for every year. This data is input on the CO Statistics worksheet. There is a button at the top of the column to check or uncheck each of the boxes in this column.

To the right of the two columns with check boxes, there is one column for each year of the study. In these cells the value for each characteristic of the network is entered. If the characteristic is unchanging, the value can be put in the Baseline column, and then do not check the corresponding box, and the baseline value will be used for each of the years.

At the very bottom of the Assumptions worksheet, there is a location where the name of the metro network can be entered. This will be used as the title for the Map. The order of the columns as well as a lesser or great number of columns can be used without departing from the scope of the present invention.

### Functions of the Active Buttons

A series of buttons are arrayed across the top of the Assumptions worksheet that control various functions for the usage of the tool.

Reset Main Input - If it is desired to run the tool again with different input data, this button is used to clear the existing data from the Main Input worksheet.

Unlock Main Input - Once the Load Model: button is pressed, the Main Input worksheet is lock to prevent accidental changes to the data before the Build Model button is pressed. If however it is desired to make changes, such as changing of the names of the headers, then the Main Input sheet can be unlocked by clicking on the this button.

Load Model - After data is entered into the Main Input worksheet, and the number of IO pairs are entered into the Assumptions worksheet, the Load Model button is used to format the output worksheets, the CO Statistics and IO input worksheets. If there are existing output worksheets, the Load Model function will delete the current worksheets and generate new ones based on the data from the Main Input and Assumptions worksheets. The Load Model function will also erase the data from the co Statistics and IO input worksheets, and reformat the sheets based on the Main Input and Assumptions worksheets.

Build Model - After the Load Model function has been run, and after the CO Statistics & IO input worksheets have been completed, the Build Model button is clicked, and then the tool will run and fill in the output sheets. The Build Model function will not operate until after the Load Model function has been run.

Reset - If it is desired to produce a new output based on the same input from Main Input sheet, but different assumptions on the other input worksheets, the reset button can be clicked on and it will clear the output worksheets without changing any of the input worksheet values.

Check & Uncheck (Selection by Scenario) - At times it is desirable to check each of the of the check boxes in the Selection By Scenario column. In this case the Check & uncheck button at the top of the column can be used to check each of the boxes at once. In a similar manner, if it is desired to clear each of the checks from the column the same Check & Uncheck button will perform this function.

Check & Uncheck (Selection by CO) - At times it is desirable to check each of the three of the check boxes in the Selection By CO column. In this case the Check & Uncheck button at the top of the column can be used to check each of the boxes at once. In a similar manner, if it is desired to clear each of the of the checks from the column the same Check & Uncheck button will perform this function.

Create Map - Once the network topology data has been loaded into the tool using the Load Model button, the mapping function can be run. At this point, the map will show the physical location of the COs, which will each be colored gray. The map can now be used to input the IO to CO associations. If the Association between COs and IOs are made manually on the CO Statistics and IOs worksheets prior to the map being created, then the pairs of IOs and COs that are subtended to a pair of IOs will be color coded the same. And the map will show the IO locations as a square instead of a circle with the same color as the subtended COs.

### Description of Each Characteristic

At the bottom of the assumptions worksheet just below the cells that holds the titles of the parameters is the place to put the name of the metro area that is under study. This will be used to title the map that can be generated from the network data.

# of Intermediate Office Pairs (IO) per metro area - Each CO is connected to two redundant Intermediate Offices (IO) for most metro areas. Each pair of IOs will have COs subtended from them. This value is the number of IO pairs that is required in the metro network, and may be zero (0) if no IOs are required in the metro area network.

% of HH connected to 7330s - This the percentage of each of the households passed, as specified on the Main Input worksheet, that will be connected to the 7330. This does not imply that this household has subscribed to any of the three services, SDV, VoIP, or HSI, but only that their POTS service is passed through the 7330. This may be done to reduce the number of truck rolls if the household decided at a later date to subscribe to one or more services. For percentage values, 7% is entered as .07.

% SDV Penetration - This is the percentage of each of the households passed, as specified on the Main Input worksheet, that will subscribe to video services. For percentage values, 7% is entered as 07.

% HSI Penetration - This is the percentage of each of the households passed, as specified on the Main Input worksheet, that will subscribe to High Speed Internet services. For percentage values, 7% is entered as .07.

% VoIP Penetration - This is the percentage of each of the households passed (as specified on the Main Input worksheet) that will subscribe to voice Over IP services. For percentage values, 7% is entered as 07.

Avg. # of Set Top Boxes (STB) per SDV subscriber - This is the average number of set top boxes that will be in each household. This number should reflect the total number of simultaneous video streams including linear programming and VoD being viewed and recorded such as Client Premise Equipment Digital Video Recorder (CPE DVR) but excluding PIP.

VDSL BW per subscriber (Mb/s) - This is the capacity that is available on the copper pair for each of the services.

### Multicast Channel Parameters

Total # of multicast HD video channels - This is the total number (quantity) of high definition linear programming channels that are available to the subscriber. This number excludes standard definition simulcast of high definition channels.

Total # of multicast SD video channels - This is the total number (quantity) of standard definition linear programming channels that are available to the subscriber. This number includes standard definition simulcast of high definition channels.

Avg. BW to transmit HD multicast program (Mb/s) - This is the average bandwidth, in Mb/s, to transmit a high definition linear programming channel to the subscriber.

Avg. BW to transmit SD multicast program (Mb/s) - This is the average bandwidth, in Mb/s, to transmit a standard definition linear programming channel to the subscriber.

% of STB that concurrently view multicast program at peak time - This number is the percentage of the total number of set top boxes (not households) deployed in the network that are watching any linear programming channel at busy hour. This number includes each of the multicast streams being recorded by a DVR. For percentage values, 7% is entered as .07.

% of above that view HD multicast channel - This percentage reflects the number of set top boxes receiving linear programming channels which are high definition. This is a percentage of the set top boxes viewing linear programming channels, not a percentage of total set top boxes. For percentage values, 7% is entered as .07.

% of uniqueness - This value is used to calculate the number of multicast groups that the 7330 will join. This is a ratio of the number of Live TV Channels being sent to the 7330, for example, divided by the number of Set Top Boxes viewing Live TV Channels. If this number is 100% then each stream going to a unique set top box. If this number is 50%, this means that half of the streams being sent to identical set top boxes. For percentage values, 7% is entered as .07.

### Channel Change Behavior Patterns at Peak Time

% of STB that concurrently change channel (ICC requests) - This is the percentage of the total number of each of the set top boxes (not households) deployed in the network that will request a linear programming channel change within the time period of the ICC burst length. This percentage includes both normal linear programming channels and channel changes to linear programming channels being watched in picture in picture mode. This number excludes requests for multicast streams for use by a DVR function embedded in the set top box. For percentage values, 7% is entered as .07.

Program change burst ratio (burst Unicast BW/normal BW) - This is the ratio of the instant channel change burst bit rate, divided by the normal video bit rate. This is a function of middleware, and as such is not a variable that can have an arbitrary value, but is dependent upon the implementation by the middleware provider. Normally this value is 1.3, as a current implementation is using a 30% higher bit rate for ICC bursts. This value can change without departing from the scope of the present invention.

### Video on Demand Parameters

Avg. BW to transmit HD VoD program to subscriber (Mb/s) - This is the average bandwidth, in Mb/s, to transmit a high definition video on demand channel to the subscriber. Due to differences in the encoding schemes for offline video on demand encoding vs. encoding of streaming linear programming channels, this bit rate may be lower than that for a high definition linear programming channel.

Avg. BW to transmit SD VoD program subscriber (Mb/s) - This is the average bandwidth, in Mb/s, to transmit a standard definition video on demand channel to the subscriber. Due to differences in the encoding schemes for offline video on demand encoding vs. encoding of streaming linear programming channels, this bit rate may be lower than that for a standard definition linear programming channel.

% of STB that concurrently view voD at peak time - This number is the percentage of the total number of set top boxes (not households) deployed in the network that are watching any video on demand channel at busy hour. For percentage values, 7% is entered as .07.

% of above that view HD VoD - This is the percentage of the number of set top boxes that are receiving video on demand content (not the total number of set top boxes) that are receiving high definition content. For percentage values, 7% is entered as .07.

% of VoD orders served by CO (if CO has VoD server) - This tool allows the video on demand server function to be split and deployed at multiple locations in the network. If a portion of the video on demand function is to be placed in the CO, then this percentage represents that portion which is served from a video on demand server located in the CO. This number is not a percentage of stored content, but a percentage of delivered content. Therefore if the latest released content is stored in the video on demand server located at the CO, this might account for a small percentage by storage capacity, but a much higher percentage of delivered content. For example if it is decided to put a video on demand server in a CO and it will contain 1% of the total video on demand content, but this 1% content is the new releases, it could account for 45% of the total content delivered to the set top boxes, therefore the number entered is 45% which is entered as 0.45.

% of VoD orders served by IO and CO (if IO has VoD server) - This parameter is similar to the one above, but for video on demand servers located in the IO. This is also a percentage of the content delivered not content stored- VoD servers can be located in the VHO, IO, and CO simultaneously. For percentage values, 7% is entered as .07.

### Other Traffic at Peak Time

Avg. PiP BW per stream (Mb/s) - This is the average bandwidth, in Mb/s, to transmit a picture in picture channel to the subscriber.

% of BTV- and voD-active STB that view PiP - This is the percentage of the active set top boxes that are receiving either broadband television or video on demand, which are also receiving a picture in picture channel. For percentage values, 7% is entered as .07.

Avg. VoIP BW per subscriber (Mb/s) - This is the average bandwidth required for the VoIP service for busy hour. This is the average bandwidth required when the VoIP user is actively making a call.

Avg. HSI BW per subscriber (Mb/s) - This is the average bandwidth required for the HSI service for busy hour. This is the average bandwidth required when the high speed internet user is active.

At the bottom of the Assumptions worksheet, a location is provided to place the name of the metro area being modeled. This will be used to properly label the map of the network. If it is left blank, then the map will not have a title.

For example, the model may be accessed by the cellular phone or the computer with external wireless capability (such as the wireless card) or internal wireless capability (such as 802.11 or any of the other 802 variants), or by the Internet Protocol enabled phone. Other devices may also communicate with the model. These modules are software, hardware, firmware, and/or the combination of software, hardware, and/or firmware. The communications coupling occurs via at least one of the wireless protocol, the wired protocol and the combination of the wireless protocol and the wired protocol.

### Filling Out The CO Statistics Worksheet

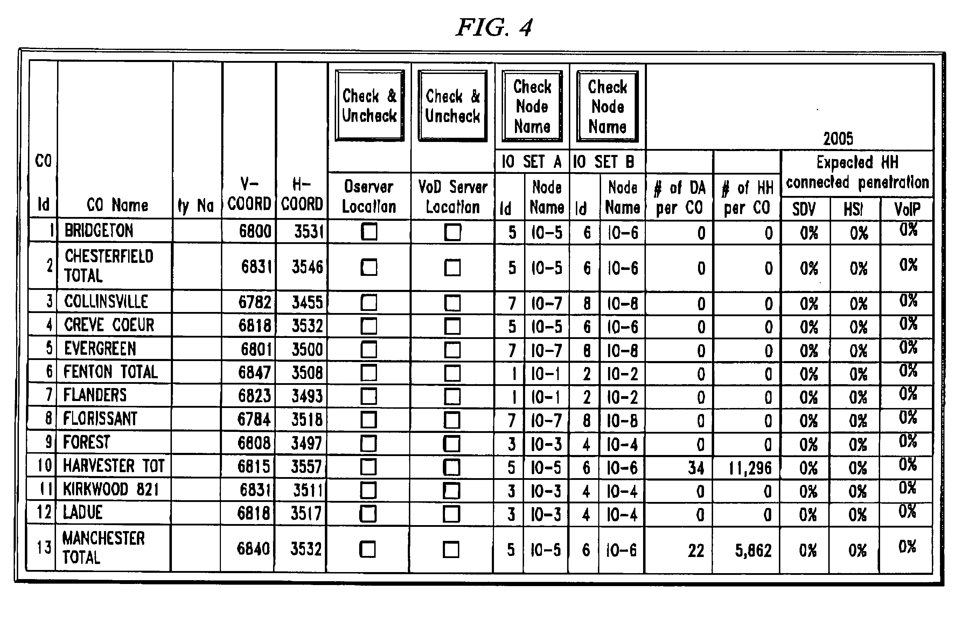

Referring now to FIG. 4 showing one embodiment of the invention there are two methods of filling out the CO Statistics and IOs worksheets, manually as described here or using the interactive map described above.

Once the Main Input worksheet and number of IO pairs on the Assumptions worksheet are completed, the Load Model button is clicked on, this will format the CO Statistics and IOs worksheets for input of the remaining data. The CO Statistics worksheet is used to input two types of data, see FIG. 4, association of each CO with its pair of los, and entering the data for the percentage of penetration of SDV, HSI, and VoIP services if the Selection By CO check box is checked on the Assumptions worksheet.

When the Load Model button is clicked on, the first five columns of this worksheet are automatically filled out with Node ID, CO Name, City Name, and V&H Coordinates.

At the top of the Assumptions worksheet, a user is asked to identify the number of pairs of IOs that will be needed for this network. When the Load Model button is clicked, the IOs worksheet will be populated with the number of IOs needed, labeled sequentially from #1 up to the number specified, i.e. if 4 pairs are entered in the Assumptions worksheet, then the IOs sheet will be labeled for IOs 1 through 8. In order to calculate the traffic from each VHO to the IO, the association of COs to their pair of IOs is made. The CO Statistics worksheet has one line of the worksheet per CO, and for each CO there are two columns for IOs, labeled IO Set A and IO Set B. For each of these sets, there are two columns, ID Number and Node Name. The IO pair ID Numbers is entered for each CO, and when complete the Check Node Name button can be clicked, and the names will automatically be filled in. The ID Number is found on the IOs worksheet in the first column. Each ID Number is identified as part of Set A or Set B on the IOs worksheet, this identifies which column on the CO Statistics worksheet the ID Number is entered. An ID Number from Set A is placed in the Set A column. In this example with 4 IO pairs, there are eight IO ID numbers, one (1) through eight (8). Each IO is connected to one of the two redundant 7750s, for example, in the VHO. By keeping the IO ID Number in the correct column, the tool is assured to sum together traffic from the appropriate COs to go to the right 7750 in the VHO.

The second function of this worksheet is to input the service penetration of each service by CO, if this function is selected on the Assumptions worksheet. If the check boxes for Selection By CO are not checked on the Assumptions worksheet, then this portion of the CO Statistics worksheet can be left blank- If it is desired to vary the penetration of each service type by CO, then the check boxes for each service to-be varied is checked on the Assumptions worksheet. Beginning in the column to the right of the red line, there are groups of columns assigned for each year of the study. The number of years is determined by the number of input columns of network data entered in the Main Input worksheet. The first two columns under each year are output columns that will be filled in when the Load Model button is clicked on after the data is entered. The remaining three columns for each year are for input of the penetration of each of the three services, SDV, HSI, and VoIP. In each of these three columns the penetration for each service is entered as a percentage for each CO. As elsewhere in this tool, percentages are entered as numbers between 0 and 1, i.e. 7% is entered as .07. This is repeated for the columns under each year in the study.

For example, the worksheet may be accessed by the cellular phone or the computer with external wireless capability (such as the wireless card) or internal wireless capability (such as 802.11 or any of the other 802 variants), or by the Internet Protocol enabled phone. Other devices may also communicate with the worksheet.

### Filling Out The IOs Worksheet

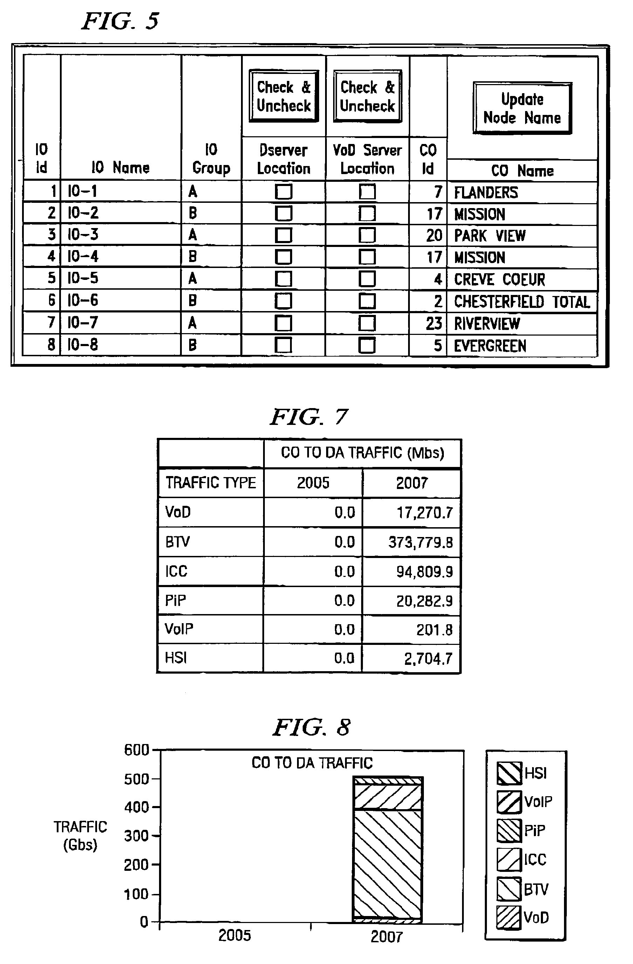

Referring now to FIG. 5 showing one embodiment of the invention, the IOs worksheet assigns a physical location to each IO. As in the CO Statistics worksheet, the IO ID Number, and IO Name will be automatically loaded when the Load Model button is clicked. Each IO is assigned to a group either A or B, which allows proper placement of the IO ID Number on the CO Statistics worksheet.

IOs are a logical construct in this tool that has functionality that is independent of physical location. The IOs worksheet may allow the placement of each IO into a particular CO. This methodology allows multiple IOs to be placed in one CO, but the IOs are independent of each other. This is accomplished by putting the CO ID Number obtained from the CO Statistics worksheet, into the column labeled CO ID. Once each IO has been assigned to a CO, then the Update Node Name button is clicked, and the appropriate CO node name will automatically be loaded into the column for node names. If the physical location of the IO is unknown, then this section of the IOs worksheet can be left blank.

### Using the Interactive Map

The map itself can be used to fill out the CO Statistics and IOs worksheets. Once the Load Model button is clicked on, fill out the name of the metro area at the bottom of the Assumptions worksheet, this will become the title of the map. Then click on the Create Map button at the bottom of the Assumptions worksheet. A map will be created with each CO represented by a gray circle. Before attempting to assign the IOs and CO assignment, first decide which offices will become the pairs of IOs, and which COs will be subtended from each pair of IOs. It helps to print the map, circle the COs that will be grouped under one pair of IOs and then mark the two COs that will be the IOs.

Assignment of IOs and subtended COs is done in sequence, first the IOs are selected and then the subtended COs. Each gray circle is an active button that can be clicked on. When the first CO is clicked on it is assumed by the tool that this is the first IO of the pair. A popup window come up and asks how many COs will be subtended from the IO pair. Remember the IOs are a logical concept and the office they are assigned to is also a CO. Scroll the number to equal the number of COs including the two IOs. In this example of Saint Louis with 28 total COs and four pairs of IOs, each IO pair will have 7 COs. This will be the two IO and five additional COs. Click on the OK button, the selected CO will change from a gray circle to a square of a different color. The color will depend upon the number of IO pairs entered on the assumptions worksheet. Next click on the CO that will be the second IO of the pair, it will change from a gray circle to a square of the same color as the first IO. Then click on the remaining COs that will be subtended from this pair of IOs, each circle will change color to match that of the IOs represented as squares.

In this example, seven COs were selected as the number associated with the first pair of IOs. When the eighth circle is selected, the process begins again. A popup window appears and asks how many COs will be associated with the next pair of IOs. When the number is selected and OK is clicked on, the gray circle will change to another color square. This is continued until each of the COs have been assigned as either IOs or subtended COs- When the last CO is selected, another popup window appears informing you that each of the Cos have been assigned. If you do not see this popup window, there is an unassigned CO somewhere on the map.

When an error like this occurs, there are several things that can be done. For example, a user could click on the Create Map button on the Assumptions worksheet which clears the map and you start over. Also, there is an Undo button on the Map worksheet that will sequentially undo each of the assignments until you reach the point where you want to correct the error. There is also a Redo button on the Map worksheet so that if you click on the Undo button too many times, you can redo the map as it was before the Undo button was clicked on. If however after undoing several assignments, you click on a gray circle to assign it to an IO pair or to create one of the IOs, the Redo button will then no longer function as each of the undone assignments are no longer valid. Another approach if there is just a minor change and the map is complete. The CO Statistics and IOs worksheets can be edited after the map is complete. Once the edits are complete, the worksheets and the map no longer agree, so the Redraw Map button on the Map worksheet can be used to redraw the map to make it correspond to the CO Statistics and IOs worksheets. This button is different than the Create Map button as it does not delete the data from the CO Statistics and IOs worksheets.

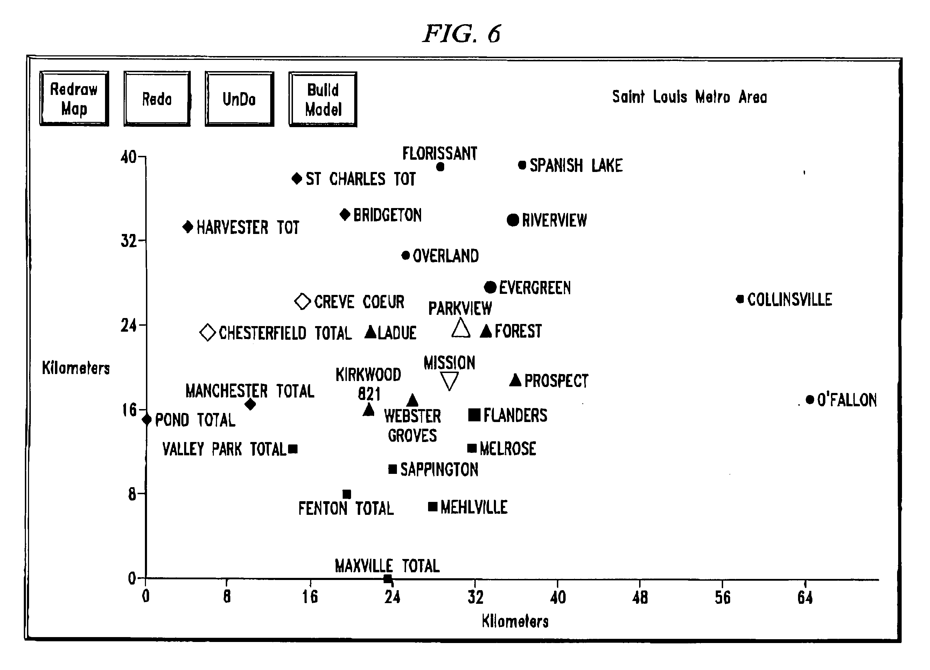

Referring now to FIG. 6, showing one embodiment of the invention, sometimes it will be desirable to place two IOs into the same CO. This is allowed as long as the two IOs are not two that form a pair. The example map in FIG. 6 shows this at the office labeled Mission. The square which was initially green changed to half green and half blue when the second 10 was assigned to the CO. The tool assumes that the CO will be subtended to the first IO assigned to that office. This is indicated by the small circle within the square. The color of the circle indicates which IO the CO is subtended from, in this case, it is the green pair of IOs.

A map can also be drawn of the location of the COs and IOs if the data for the CO Statistics and IOs worksheets is entered manually. In order for the map to use its functionality, the network data is input, the assumptions entered, and the model loaded prior to mapping the network, and the input to the CO Statistics and IOs worksheets is completed. If this is done, then the map will show the physical location of each CO as a circle on the map, identify each CO that is an IO as a square instead of a circle, and color code each pair of los identically as well as color code each CO that is subtended from this pair of IOs with the same color- Once the data is entered on the CO Statistics and IOs worksheets, click on the Redraw Map button on the Map worksheet, and the map will be drawn.

The map produced will show geographically the location of each CO, with a horizontal and vertical scale in Kilometers. Other scales can be used without departing from the scope of the present invention. The CO furthest West will lie directly on the vertical axis, and the CO furthest South will lie directly on the Horizontal axis. The tool will automatically scale the axis to fit the network size. The map will be drawn to fit 11 x 17 inch paper (although other size paper can be used) and the orientation will be either Landscape or Portrait, whichever fits the scale of the network best. The entry at the bottom of the Assumptions worksheet for the metro area name, will be the label for the map. An example map is shown in FIG. 6.

For example, the map may be accessed by the cellular phone or the computer with external wireless capability (such as the wireless card) or internal wireless capability (such as 802.11 or any of the other 802 variants), or by the Internet Protocol enabled phone. Other devices may also communicate with the map.

### Building the Output Data

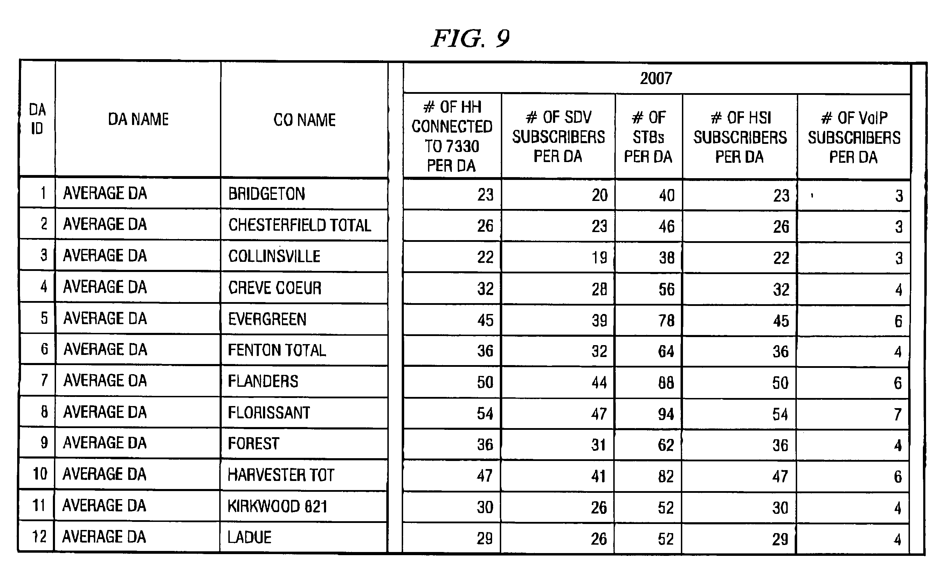

Referring now to FIGs. 7 and 8, showing one embodiment of the invention, once the input data is input into the Main Input worksheet, and the assumptions are entered into the Assumptions, Co Statistics, and IOs worksheets, the tool is ready to run. Clicking on the Build Model button on the Assumptions worksheet will start the tool calculating the output data. This process will take a few seconds. When the calculations are complete, the tool will have opened the traffic summary worksheet.

If it is desired to make another run on the tool using the same input data, but different assumptions, then there is a Reset Output button on the Assumptions worksheet that will clear the output data, so that there will be no confusion with old data when a new run is made. Simply click on the Reset Output button, change whatever assumptions need to be changed and then click on the Build Model button on the Assumptions worksheet.

### Tool Output Data

The IPTV Traffic Modeling Tool produces a variety of output worksheets. A Summary worksheet with high level graphs of the output data gives a quick overview of the results of the modeling. Three worksheets showing statistics about the subscribers from three view points, at the 7330 at the DA, at the 7450 at the CO, and at the 7750 at the IO. Three worksheets showing the traffic for each traffic type at the three locations in the network, the 7330 at the DA, the 7450 at the CO, and the 7750 at the IO. Each of the output worksheets will show data for each of the years in the study. As previously mentioned, a number of other Alcatel switches, routers, and telecommunications equipment can be used without departing from the scope of the present invention. The data is shown at the upstream side of the location listed. For example, output traffic listed as per CO will be the traffic at the input to the CO from the IO. Statistics for and/or from other switches or nodes can be used without departing from the scope of the present invention.

In addition to the numeric data for traffic in the network, a worksheet will be created as part of the mapping function that will contain the physical map of the metro network.

### Traffic Summary Output Sheet

This is the first of the output sheets and it gives an overview of the metro network traffic volumes. Three tables and associated charts are on this sheet, an example of each is shown in FIGs. 7 and 8. The number of columns in each table corresponds to the number of years in the study. The table shows the sum of the traffic for the network at the location listed in the table name. For example, the first table is labeled CO - DA Traffic, and this is the sum of the traffic from each CO to each of its DAs for every CO in the network.

Although this table tells you nothing about any particular DA in the network, nor even an average for a Typical DA, it gives a representation of the relative traffic volumes going to each DA. Each Table has an associated graph which is shown as a stacked Column Chart, the total height of the column is unimportant, but the ratio of the various traffic types in each of the columns, represents the average ratio of the traffic types of any DA. Likewise, the IO-CO Traffic and the VHO-IO Traffic tables represent the sum of the traffic at those points in the network. The height of the columns do not represent a physical attribute of the network, what is important is the relative size of the various traffic types.

### Average Traffic Summary Output Sheet

The second output worksheet is the Avg. Traffic Summary worksheet, which is identical in organization to the Traffic Summary Worksheet, but the values are average values across the network not the sum. This worksheet gives an average value for the each point in the network. In these graphs the magnitude of the graph gives an indication of what you could expect at any particular point, such as a DA, CO, or IO.

For example, the worksheet may be accessed by the cellular phone or the computer with external wireless capability (such as the wireless card) or internal wireless capability (such as 802.11 or any of the other 802 variants), or by the Internet Protocol enabled phone. Other devices may also communicate with the worksheet.

### Detailed Output Sheets

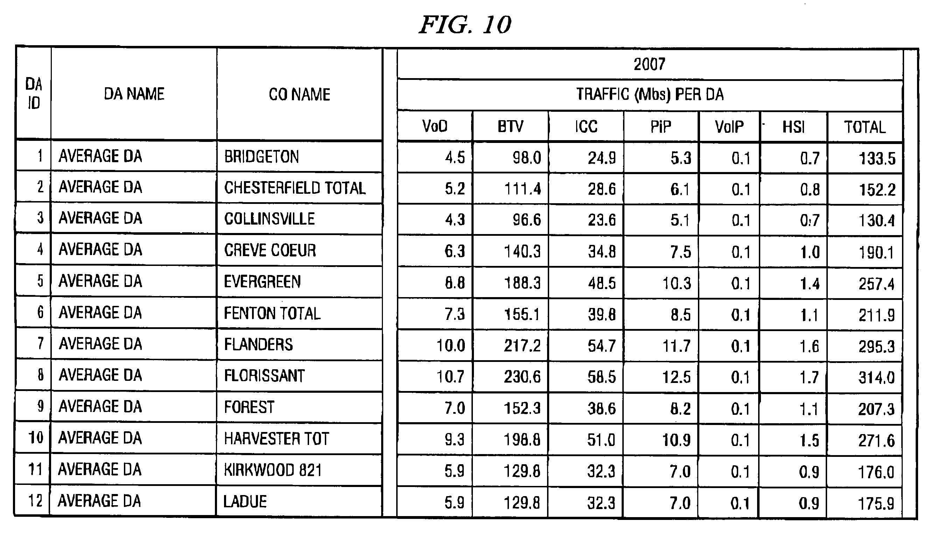

Referring now to FIGs. 9 and 10, one embodiment of the invention depicts a pair of output worksheets for the DAs. FIG. 9 contains statistics about the subscribers at the DAs, and FIG. 10 contains the numeric results of the traffic modeling for the DAs by traffic type. For the DAs, statistics about subscribers and traffic will be displayed in one of two ways, first if the data is entered in the per DA format, then each line of the output sheet will be for a specific DA. Whereas if the data is entered in the per CO format, the output will look like Figures 9 and 10 and each line will be for a single CO. For the per CO input format, the DA Name column will contain the term Average DA and the data will assume that each of the DAs for this office are identical, and the output values will be averaged across the number of DAs that were input on the Main Input worksheet.

The Total and Average numbers at the bottom of the table can take two forms, one for data entered in the per DA format and another for the per CO format. If the data is entered for the per DA format, then the totals will be a simple total of the columns and the average will be the totals divided by the number of DAs. If however the data is entered in the per CO format, then each line of the output will represent the average traffic per DA for that CO, making the assumptions that the DA subtended from that CO are identical. In the per CO format, the totals will not be simple totals of the columns, but will be the totals for the entire metro network, and will be the same number as if the data were entered in the per DA manner. The average number in the per CO input format will be the average per DA, just as if the data were entered in the per DA format.

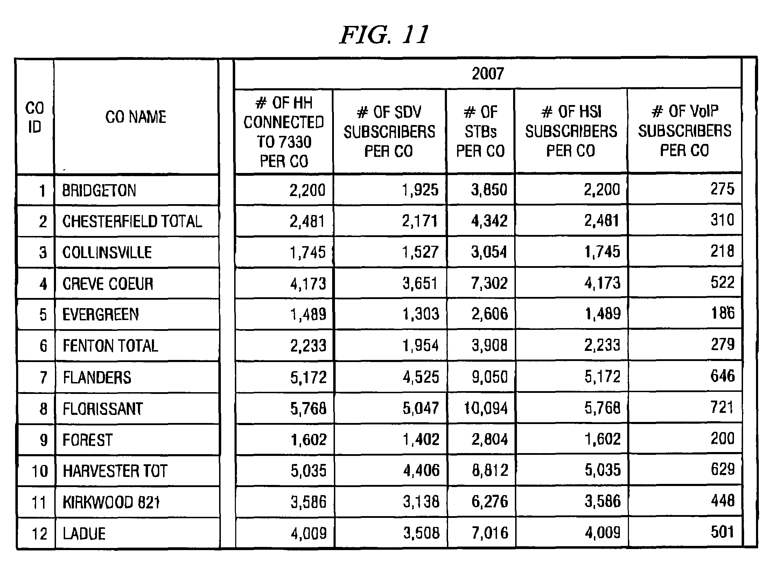

Referring now to FIG. 11 one embodiment of the invention shows the output statistics worksheet for the COs and for the IOs . The column headings for the CO and IO worksheets will be slightly different as they will show per CO or per IO. The statistics columns shown for 2005, will be replicated to the right on the worksheet for each year in the study.

For example, the worksheet may be accessed by the cellular phone or the computer with external wireless capability (such as the wireless card) or internal wireless capability (such as 802.11 or any of the other 802 variants), or by the Internet Protocol enabled phone. Other devices may also communicate with the worksheet.

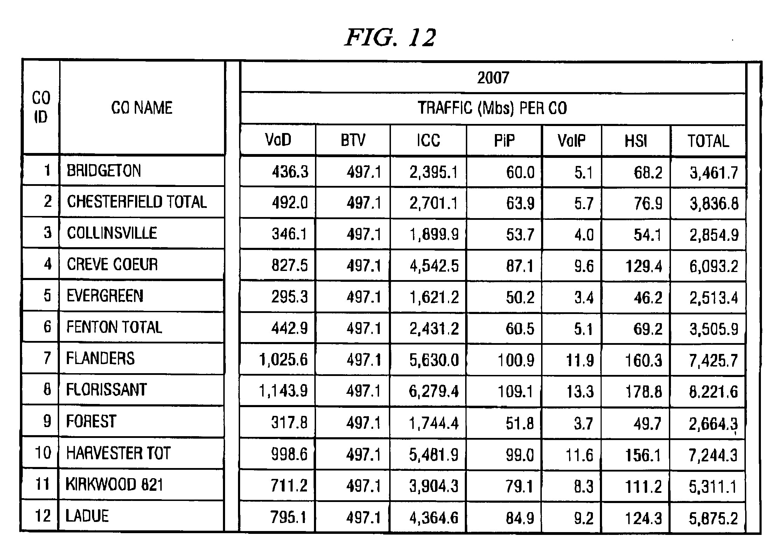

Referring now to FIG. 12, one embodiment of the invention shows the traffic output for the COs and for the IOs for each of the six traffic types, plus the total of each types of traffic. For the CO output worksheet, the data will be per CO and the CO Name column will contain the name of every CO in the metro area. The data on each line will be the traffic into each CO from its IO. Since the CO is connected to two 10s, the data given is the traffic into the CO regardless of which IO it is coming from.

For the IO output worksheet, the Name column will be IO Name, and the column will contain IO-1, IO-2, ...,etc up to the maximum number of IOs required to meet the input IO pairs required that was input in the Assumptions worksheet. The data will be the traffic into each IO from the VHO. This output sheet lists both IOs of each pair, the traffic given is the total that would exist if one of the links between the VHO and the other redundant IO has failed. Therefore the traffic for each of the IO in a pair are identical, and if the columns are summed together, the resulting traffic would be twice what is actually in the network. This is a trade off in readability, the values in the table is what the equipment in each IO is designed for.

For example, the model may be accessed by the cellular phone or the computer with external wireless capability (such as the wireless card) or internal wireless capability (such as 802.11 or any of the other 802 variants), or by the Internet Protocol enabled phone. Other devices may also communicate with the model. These modules are software, hardware, firmware, and/or the combination of software, hardware, and/or firmware. The communications coupling occurs via at least one of the wireless protocol, the wired protocol and the combination of the wireless protocol and the wired protocol.

### Algorithms for the Modeling Tool Calculations

The three sources of input parameters are the Assumptions sheet, Main Input sheet and the CO Statistics sheet. The list of parameters and definitions from the Assumptions sheet were presented above.

The following parameters from the Main Input sheet have been used:
NumHHperEntry - # of households (HH) per CO or DA (depending on level of input data); and
NumDAperEntry - # of DA per CO or DA (this parameter = 1 in case of DA level input).

The following three parameters from the CO Statistics sheet provide CO level service penetration rate:
% of SDV penetration;
% of HSI penetration; and
% of VoIP penetration.

In the CO Statistics worksheet, if the input data in Main Input sheet is input on DA level, then # of DAs per CO and # of HHs per CO are calculated by summarization of data in Main Input sheet to CO level.

If the input data in Main Input sheet is input on CO level, then # of DAs per CO and # of HHs per CO are equal to corresponding entries from Main Input sheet.

### Subscriber Statistics Worksheets

### DA Subscriber Worksheet

Every entry in this sheet provides subscriber statistics on the DA level. If the input data in the Main Input sheet has been provided on the DA level, every DA from the Main Input sheet should be present in the DA Sub sheet. If the input data in the Main Input sheet has been provided on the CO level, one average DA per CO should be present in DA Sub sheet.

To calculate output the values in this sheet the following formulas have been used:
# of HH connected to 7330 per DA = NumHHperEntry * % of HH connected to the 7330s;
# of SDV subscribers per DA = NumHHperEntry * % of SDV penetration;
# of STBs per DA = NumSDV_sub * Avg. # of set top boxes per SDV subscriber;
# of HSI subscribers per DA = NumHHperEntry * % of HSI penetration; and
# of VoIP subscribers per DA = NumHHperEntry * % of VoIP penetration;
Where: NumHHperEntry is:
# of HH per DA, if the input data are on the DA level; or
# of HH per average DA, i.e. # of HH per CO divided by # of DA per CO, if the input data are on the CO level.
The # of HH per DA/CO and # of DA per CO are available from the Main Input sheet.

### CO Subscriber Worksheet

Every entry in this sheet provides subscriber statistics on the CO level. To calculate the output values in this sheet the following formulas have been used:
# of HH connected to the 7330s per CO = NumHHperCO * % of HH connected to the 7330s;
# of SDV subscribers per CO = NumHHperCO * % of SDV penetration;
# of STBs per CO = # of SDV subscribers per CO * Avg. # of set top boxes per SDV subscriber;
# of HSI subscribers per CO = NumHHperCO * % of HSI penetration; and
# of VoIP subscribers per CO = NumHHperCO * % of voIP penetration.
Where: The NumHHperCO is available form CO Statistics sheet.

### IO Subscriber Worksheet

Every entry in this sheet provides subscriber statistics on the IO level.

The output values:
# of HH connected to the 7330s per IO;
# of SDV subscribers per IO;
# of STBs per IO;
# of HSI subscribers per IO; and
# of VoIP subscribers per IO.

For every IO in this sheet the results are a summarization of the corresponding values from the CO Sub sheet for each COs subtended to this IO.

### Traffic Output Worksheets

Every entry in these output sheets provides traffic statistics on the DA, CO, and IO level. If the input data in the Main Input sheet has been provided on the DA level, every DA from the Main Input sheet should be present in the DA Traf sheet. If the input data in the Main Input sheet has been provided on the CO level, then one average DA per CO should be present in DA Traf sheet.

### VOD Traffic Calculations

VoD traffic = # of STBs per DA/CO/IO *
% of STB that concurrently view VoD at peak time *
(% of voD-active STBs that view HD VoD *
Avg. BW to transmit HD VoD program to the subscriber t (1 - % of voD-active STBs that view HD VoD) *
Avg. BW to transmit SD VoD program to the subscriber)
Where: the # of STBs per DA/CO/IO is available from DA Sub, CO Sub, or IO Sub sheets, correspondingly.

### BTV Traffic Calculations

To calculate BTV traffic for the DA Traf sheet the following formulas have been used:
BTV traffic per DA = NumBC_HD_per_7330 * Avg. BW to transmit HD multicast program + NumBC_SD_per_7330 * Avg. BW to transmit SD multicast program,
Where:
NumBC_HD_per_7330 = min { Total # of multicast HD video channels,
┌(# of STBs per DA * % of STB that concurrently view multicast program at peak time *
% of Broadcast Channels (BC) -active STBs that view HD BC * % of uniqueness)┐}
NumBC_SD-per_7330= min (Total # of multicast SD video channels,
┌(# of STBs per DA * % of STB that concurrently view multicast program at peak time *
(1-% of BC-active STBs that view HD BC) * % of uniqueness)┐}
where ┌x┐ is a minimum integer number that ≥ x.

To calculate BTV traffic for the CO Traf and IO Traf sheets, the following formulas have been used:
BTV traffic per CO/IO = Total # of multicast HD video channels * Avg. BW to transmit HD multicast program + Total # of multicast SD video channels* Avg. BW to transmit SD multicast program,
If the # of STBs per CO/IO > 0, or
BTV traffic per CO/IO = 0 , if the # of STBs per CO/IO = 0.

### ICC Traffic Calculations

ICC_Traf per DA/CO/IO = # of STBs per DA/CO/IO *
% of STB that concurrently view multicast program at peak time *
% of BTV-active STB that concurrently change channel *
Program change burst ratio *
(% of BC-active STBs that view HD BC *
Avg. BW to transmit HD multicast program +
(1 - % of BC-active STBs that view HD BC) * Avg. BW to transmit SD multicast program),
Where: the # of STBs per DA/CO/IO is available from DA Sub, CO Sub, or IO Sub sheet, correspondingly.

### PIP Traffic Calculations

PiP traffic = voD PiP traffic + Linear Programming PiP traffic,
Where:
VoD PiP traffic per DA/CO/IO = # of STBs per DA/CO/IO *
% of STB that concurrently view VoD at peak time *
% of VoD-active STB that view PiP * Avg. PiP BW per stream
Methods of calculation of linear programming PiP traffic are different for DA, CO and IO levels.

Linear Programming PiP traffic per DA = (NumBC_HD_per_733D + NumBC_SD__per_7330) * Avg. PiP BW per stream,
Where: formulas for NumBC_HD_per_7330 and NumBC_5D_per_7330 are in paragraph 0141.

Linear Programming PiP traffic per CO/IO = (Total # of multicast HD video channels + Total # of multicast SD video channels) * Avg. PiP BW per stream.

### VoIP Traffic Calculations

voIP traffic per DA/CO/IO = # of VoIP subscribers per DA/CO/IO * Avg. VoIP BW per subscriber,
Where: the # of VoIP subscribers per DA/CO/IO are available from DA Sub, CO Sub, or TO Sub sheet, correspondingly.

### HSI Traffic Calculations

HSI traffic per DA/CO/IO = # of HSI subscribers per DA/CO/IO * Avg. HSI BW per subscriber,
Where: the # of HSI subscribers per DA/CO/IO are available from DA Sub, CO Sub, or IO Sub sheet, correspondingly.

### Total Traffic Calculations

Total traffic = VoD traffic + BTV traffic + ICC_Traf + PiP traffic + VoIP traffic + HSI traffic

The following computer readable medium as well as the following features, separately or in any combination, may also constitute advantageous embodiments of the described or claimed invention:
- A computer readable medium comprising instructions for: calculating video on demand traffic; calculating instant channel change traffic; calculating broadband television traffic; calculating picture-in-picture traffic; calculating Voice over Internet Protocol (VOIP) traffic; calculating high speed Internet traffic; and calculating total traffic as a summation of the calculated video on demand traffic, the calculated instant channel change traffic, the calculated broadband television traffic, the calculated picture-in-picture traffic, the calculated VoIP traffic and the calculated high speed Internet traffic; wherein the calculated traffic is used for traffic dimensioning in a metro area with Internet Protocol Television (IPTV) architecture;
- The claimed and/or described computer readable medium wherein the calculation of video on demand traffic comprises multiplying a number of set top boxes by a percentage of set top boxes that concurrently view video on demand at peak time multiplied by a product of a percentage of video on demand active set top boxes that view high definition video on demand and an average bandwidth to transmit high definition video on demand to a subscriber added to the product of one minus the percentage of video on demand active set top boxes that view high definition video on demand and the average bandwidth to transmit standard definition video on demand to the subscriber;
- The claimed and/or described computer readable medium wherein the calculation of broadband television traffic comprises a product of a total number of multicast high definition video channels and an average bandwidth to transmit a high definition multicast program added to a product of a total number of multicast standard definition channels and an average bandwidth to transmit a standard definition multicast program;
- The claimed and/or described computer readable medium wherein the calculation of instant channel change traffic comprises multiplying a number of set top boxes by a percentage of set top boxes that concurrently view multicast program at peak time multiplied by a percentage of broadband television active set top boxes that concurrently change channel multiplied by a program change burst ratio multiplied by a percentage of broadcast channel active set top boxes that view high definition broadcast channel multiplied by the average bandwidth to transmit high definition multicast program added to one minus a percentage of broadcast channel active set top boxes that view high definition broadcast channel multiplied by an average bandwidth to transmit a standard definition multicast program;
- The claimed and/or described computer readable medium wherein the calculation of picture in picture traffic comprises adding video on demand picture-in-picture traffic and linear programming picture-in-picture traffic;
- The claimed and/or described computer readable medium wherein the video on demand picture-in-picture traffic comprises multiplying a number of set top boxes by a percentage of set top boxes that concurrently view video on demand at peak time multiplied by a percentage of video on demand active set top boxes that view video on demand multiplied by an average picture in picture bandwidth per stream;
- The claimed and/or described computer readable medium wherein the linear programming picture-in-picture traffic comprises a product of a sum of a total number of multicast high definition video channels and a total number of multicast standard definition channels multiplied by an average picture in picture bandwidth per stream;
- The claimed and/or described computer readable medium wherein the calculation of VoIP traffic comprises a number of voice over internet subscribers multiplied by an average voice over internet protocol bandwidth per subscriber;
- The claimed and/or described computer readable medium wherein the calculation of high speed Internet traffic comprises a product of a number of high speed Internet subscriber and an average high speed Internet bandwidth per subscriber;
- The claimed and/or described system wherein: the processor extracts central office data, which includes at least one of: a data server location, a video on demand server location, a node name for each of the at least one redundant intermediate offices, a number of distribution areas per central office, a number of households per central office and expected household connection percentages for switch digital video, high speed Internet and VoIP.

Although the exemplary embodiment of the system of the present invention has been illustrated in the accompanied drawings and described in the foregoing detailed description, it will be understood that the invention is not limited to the embodiments disclosed, but is capable of numerous rearrangements, modifications, and substitutions without departing from the spirit of the invention as set forth and defined by the following claims. For example, the capabilities of the invention can be performed fully and/or partially by one or more of the super head ends, video hub offices, intermediate offices and central offices- Further, although depicted in the particular manner, various blocks may be repositioned without departing from the scope of the current invention. For example, although depicted in the particular manner, the greater or lesser number of super head ends, video hub offices, intermediate offices and central offices could be utilized. Further, a greater or lesser number of worksheets and columns depicted in these worksheets can be used without departing from the scope of the current invention. Also, other telecommunication information not discussed herein can be used by the tool of the present invention.

## Claims

1. A method for traffic dimensioning in a metro area with Internet Protocol Television (IPTV) architecture, comprising:
allocating a vertical coordinate and a horizontal coordinate to each of a plurality of physical offices;
assigning to each of at least one pair of redundant intermediate offices the physical office;
associating a central office to the at least one pair of redundant intermediate offices; and
mapping each of the at least one pair of assigned redundant intermediate offices to the physical office.

2. The method of claim 1 comprising instructions for:
analyzing the mapped redundant intermediate offices to insure that the redundant intermediate offices which are associated with the central office are not located at the same physical office.

3. The method of claim 1 comprising instructions for:
creating a map based upon the assigned physical office of the at least one pair of redundant intermediate offices.

4. The method of claim 3 comprising instructions for:
color coding the created map to show an association between the at least one pair of redundant
intermediate offices and the central office.

5. The method of claim 1 comprising instructions for:
extracting data from an assumptions worksheet, which includes at least one of: multicast channel information, channel change behavior at peak time information and video on demand information.

6. The method of claim 1 comprising instructions for:
extracting data from a main input worksheet, which includes at least one of: central office vertical coordinates, central office horizontal coordinates, a number of distribution areas and a number of households.

7. The method of claim 1 comprising instructions for:
extracting data from a central office statistics worksheet, which includes at least one of: a data server location, a video on demand server location, a node name for each of the at least one redundant intermediate offices, a number of distribution areas per central office, a number of households per central office and expected household connection percentages for switch digital video, high speed Internet and VoIP.

8. A system for traffic dimensioning in a metro area with Internet Protocol Television (IPTV) architecture comprising:
a processor adapted to sum a total traffic comprised of a calculated video on demand traffic, a calculated instant channel change traffic, a calculated broadband television traffic, a calculated picture in picture traffic, a calculated voice over internet protocol traffic and a calculated high speed internet traffic for a central office in communication with at least one pair of redundant intermediate offices; and
memory coupled to the processor for storing each summation and calculation.

9. The system of claim 8 wherein the processor analyzes the set of redundant intermediate offices to insure that each of the set of redundant intermediate office associated with the central office are located at different physical offices.

10. The system of claim 8 wherein:
the processor extracts assumptions data, which includes at least one of: multicast channel information, channel change behavior at peak time information and video on demand information; and
the processor extracts input data, which includes at least one of: central office vertical coordinates, central office horizontal coordinates, a number of distribution areas and a number of households.
